# EUROPEAN PATENT APPLICATION

(11) **EP 2 568 520 A1**
(43) Date of publication of application: **13.03.2013**
(21) Application number: 11777439.8
(22) Date of filing: 27.04.2011
(51) Int. Cl.: H01M 4/13, H01M 4/02, H01M 4/04, H01M 4/139, H01M 4/62, H01M 4/66, H01M 10/04, H01M 10/058

(54) **ELECTRODE STRUCTURE, METHOD FOR PRODUCING SAME, AND BIPOLAR BATTERY**

(30) Priority: 19.04.2011 JP 2011093063; 07.05.2010 JP 2010107013
(71) Applicant: Nissan Motor Co., Ltd, Yokohama-shi, Kanagawa 221-0023 (JP)
(72) Inventor: MIYATAKE, Kazuki, Atsugi-shi,Kanagawa 243-0123 (JP); HOSAKA, Kenji, Atsugi-shi,Kanagawa 243-0123 (JP); OBIKA, Motoharu, Atsugi-shi,Kanagawa 243-0123 (JP); MIYAKUBO, Hiroshi, Atsugi-shi,Kanagawa 243-0123 (JP); AOYAGI, Masanori, Atsugi-shi ,Kanagawa 243-0123 (JP); MASUMA, Yoshitaka, Atsugi-shi,Kanagawa 243-0123 (JP); MINEO, Norikazu, Atsugi-shi ,Kanagawa 243-0123 (JP); TAKAYA, Masahiro, Atsugi-shi ,Kanagawa 243-0123 (JP)
(74) Representative: Grünecker, Kinkeldey, Stockmair & Schwanhäusser
(86) International application number: PCT/JP2011/060306
(87) International publication number: WO 2011/138920

(57) **Abstract**

The present invention provides an electrode structure, a method for producing an electrode structure, and a bipolar battery using the electrode structure. The electrode structure includes a substrate, an electrode active material layer divided into a plurality of portions on a side of a surface thereof, and a high resistance member having an electric resistance higher than that of an electrolyte. The electrode active material layer is formed on the substrate. The high resistance member is formed on at least a part of a parting portion between the divided portions of the electrode active material layer. The method for producing an electrode structure includes a step (1) of forming a high resistance member having an electric resistance higher than that of an electrolyte on a transfer substrate, the high resistance member serving to form a parting portion, a step (2) of subjecting a substrate to transfer of the high resistance member formed on the transfer substrate, and a step (3) of applying a slurry for forming an electrode active material layer to a portion of the substrate subjected to transfer of the high resistance member, the portion having no high resistance member transferred.

## Description

### TECHNICAL FIELD

The present invention relates to an electrode structure, a method for producing the electrode structure, and a bipolar battery.
More specifically, the present invention relates to an electrode structure including a substrate, an electrode active material layer that is formed on a main surface of the substrate and divided into a plurality of portions on a side of a surface thereof, and a high resistance member that is formed on a parting portion between the divided portions of the electrode active material layer and has an electric resistance higher than that of an electrolyte.
In addition, the present invention relates to a method for producing the electrode structure, and a bipolar battery using the electrode structure.
Further, the present invention relates to an electrode structure including an electrode active material layer that is divided into a plurality of portions on a side of a surface thereof and contains a porous retainer material, and a high resistance member that is formed on a parting portion formed between the divided portions of the electrode active material layer and has an electric resistance higher than that of an electrolyte, the high resistance member being connected with the porous retainer material.
Furthermore, the present invention relates to a method for producing the electrode structure.

### BACKGROUND ART

Conventionally, in order to suppress variation in temperature distribution on a surface of an electrode, there has been proposed an electrode for a battery apparatus which includes a current collector, and a plurality of electrode patterns formed on a surface of the current collector, wherein among the plurality of electrode patterns, an electrode pattern in a region having a less heat radiation than that of the other region, has a lower formation density than that of am electrode pattern in the other region (see Patent Literature 1).

However, in the conventional art as described in Patent Literature 1, for instance, in a case where an internal short-circuit occurs inside of the battery, an electric current may flow through an electrolyte present in the plurality of electrode patterns. As a result, local temperature rise tends to occur due to heat generation caused in the electrolyte.

### CITATION LIST

### PATENT LITERRATURE

Patent Literature 1: Japanese Patent Application Unexamined Publication No. 2008-53088

### SUMMARY OF INVENTION

An object of the present invention is to provide an electrode structure capable of suppressing or preventing occurrence of local temperature rise and thereby enhancing a long-term reliability such as cycle characteristic, a method for producing the electrode structure, and a bipolar battery using the electrode structure.

As a result of intense studies and researches, the present inventors have found that the above object can be achieved by an electrode structure that includes a substrate, an electrode active material layer formed on a main surface of the substrate which are divided into a plurality of portions on a side of a surface thereof, and a high resistance member having an electric resistance higher than that of an electrolyte, the high resistance member being formed on a parting portion formed between the divided portions of the electrode active material layer. The present invention has been accomplished on the basis of this finding. In addition, the present inventors have further found that the above object can be achieved by an electrode structure including an electrode active material layer that is divided into a plurality of portions on a side of a surface thereof and contains a porous retainer material, and a high resistance member having an electric resistance higher than that of an electrolyte, the high resistance member being formed on a parting portion formed between the divided portions of the electrode active material layer, the high resistance member being connected with the porous retainer material. The present invention has also been accomplished on the basis of the finding.

That is, the electrode structure according to the present invention includes a substrate, an electrode active material layer formed on a main surface of the substrate, and a high resistance member having an electric resistance higher than that of an electrolyte.
The electrode active material layer is divided into a plurality of portions on a side of a surface thereof, and the high resistance member is formed on a parting portion formed between the divided portions of the electrode active material layer.

In addition, the electrode structure according to another embodiment of the present invention includes an electrode active material layer containing a porous retainer material, and a high resistance member having an electric resistance higher than that of an electrolyte.
The electrode active material layer is divided into a plurality of portions on a side of a surface thereof, and the high resistance member is formed on a parting portion formed between the divided portions of the electrode active material layer, the high resistance member being connected with the porous retainer material.

Further, a method for producing an electrode structure according to the present invention includes a step (1) of forming a high resistance member having an electric resistance higher than that of an electrolyte on a transfer substrate, the high resistance member serving to form a parting portion, a step (2) of subjecting a substrate to transfer of the high resistance member formed on the transfer substrate, and a step (3) of applying a slurry for forming an electrode active material layer to a portion of the substrate subjected to transfer of the high resistance member, the portion of the substrate having no high resistance member transferred.

Further, a method for producing an electrode structure according to the other embodiment of the present invention includes a step (1') of heating and/or compressing a part of a porous retainer material to form a high resistance member having an electric resistance higher than that of an electrolyte, the high resistance member serving to form a parting portion, and a step (2') of impregnating a slurry for forming an electrode active material layer into a portion of the porous retainer material on which no high resistance member is formed.

Further, a bipolar battery according to the present invention includes an electrolyte, and an electrode structure including a substrate, an electrode active material layer formed on both main surfaces of the substrate and divided into a plurality of portions on a side of a surface thereof, and a high resistance member having an electric resistance higher than that of an electrolyte, the high resistance member being formed on a parting portion formed between the divided portions of the electrode active material layer.
In addition, in the electrode structure, the electrode active material layer formed on one of both the main surfaces of the substrate is a positive electrode active material layer, and the electrode active material layer formed on the other of both the main surfaces of the substrate is a negative electrode active material layer.

The electrode structure according to the present invention has the following constructions (1) and (2).
(1) including a substrate, an electrode active material layer formed on a main surface of the substrate and divided into a plurality of portions on a side of a surface thereof, and a high resistance member having an electric resistance higher than that of an electrolyte.
(2) including an electrode active material layer divided into a plurality of portions on a side of a surface thereof, the electrode active material layer containing a porous retainer material, and a high resistance member having an electric resistance higher than that of an electrolyte, the high resistance member being formed on a parting portion formed between the divided portions of the electrode active material layer, the high resistance member being connected with the porous retainer material.
   With these constructions, for instance, in a case where an internal short circuit occurs in a battery, it is possible to suppress or prevent occurrence of local temperature rise due to a flow of current passing through the electrolyte, and thereby enhance long-term reliability such as cycle characteristic. According to the present invention, it is possible to provide the electrode structure, a method for producing the electrode structure, and a bipolar battery using the electrode structure.

### BRIEF DESCRIPTION OF DRAWINGS

FIG. 1(a) is a plan view showing a schematic construction of an example of an electrode structure according to an embodiment of the present invention, and FIG. 1(b) is a cross-sectional view showing a schematic construction of the electrode structure according to the embodiment of the present invention.
FIG. 2(a) is a plan view showing a schematic construction of other examples of the electrode structure according to the embodiment of the present invention, and FIG. 2(b-1) and FIG. 2(b-2) are cross-sectional views showing schematic constructions of the other examples of the electrode structure according to the embodiment of the present invention.
FIGS. 3(a)-3(c) are explanatory diagrams showing an example of a method for producing an electrode structure according to an embodiment of the present invention.
FIGS. 4(a)-4(d) are explanatory diagrams showing the other example of the method for producing the electrode structure according to the embodiment of the present invention.
FIG. 5(a) is a plan view showing a schematic construction of an example of a bipolar battery according to an embodiment of the present invention, and FIG. 5(b) is a cross-sectional view showing a schematic construction of the bipolar battery according to the embodiment of the present invention.
FIG. 6(a) is a cross-sectional view showing a schematic construction of the other example of a bipolar battery according to the embodiment of the present invention, and
FIG. 6(b) is a cross-sectional view showing a schematic construction of a further example of the bipolar battery according to the embodiment of the present invention.
FIG. 7(a) is a cross-sectional view showing a schematic construction of a bipolar battery of Comparative Example 1-1,
FIG. 7(b) is a cross-sectional view showing a schematic construction of a bipolar battery of Comparative Example 1-2, and FIG. 7(c) is a cross-sectional view showing a schematic construction of a bipolar battery of Comparative Example 1-3.
FIG. 8 is a perspective view showing a schematic construction of a negative electrode structure obtained in Example 2-1 according to the present invention.

### DESCRIPTION OF EMBODIMENTS

In the following, an electrode structure, a method for producing the electrode structure, and a bipolar battery using the electrode structure, according to embodiments of the present invention are explained in detail.

### [Electrode Structure]

An electrode structure according to an embodiment of the present invention includes a substrate, an electrode active material layer formed on a main surface of the substrate, the electrode active material layer being divided into a plurality of portions on a side of a surface thereof, and a high resistance member having an electric resistance higher than that of an electrolyte, the high resistance member being formed on a parting portion formed between the divided portions of the electrode active material layer.

Further, another electrode structure according to the embodiment of the present invention includes an electrode active material layer divided into a plurality of portions on a side of a surface thereof, the electrode active material layer containing a porous retainer material, and a high resistance member having an electric resistance higher than that of an electrolyte, the high resistance member being formed on a parting portion formed between the divided portions of the electrode active material layer, the high resistance member being connected with the porous retainer material.

In the electrode structure of the present invention, the high resistance member having the electric resistance higher than that of an electrolyte is formed on the parting portion formed between the divided portions of the electrode active material layer. With this construction, for instance, even in a case where an internal short circuit occurs in a battery, it is possible to suppress a flow of current passing through the electrolyte and suppress or prevent occurrence of local temperature rise. Further, by using such an electrode structure, it is possible to enhance long-term reliability, such as cycle characteristic, of a bipolar secondary battery.

The electric resistance of the electrolyte and the high resistance member is not particularly limited to a specific value as long as the above relationship between the electrolyte and the high resistance member is satisfied. However, a ratio of the electric resistance between the electrolyte and the high resistance member is preferably, not less than 1.5 and more preferably, not less than 2.0.

In the following, the electrode structure according to the embodiment of the present invention are explained in detail by referring to the accompanying drawings. A dimensional ratio between parts shown in the drawings as referred to in the following embodiments is exaggerated for the sake of simple explanation, and may be different from an actual dimensional ratio therebetween.

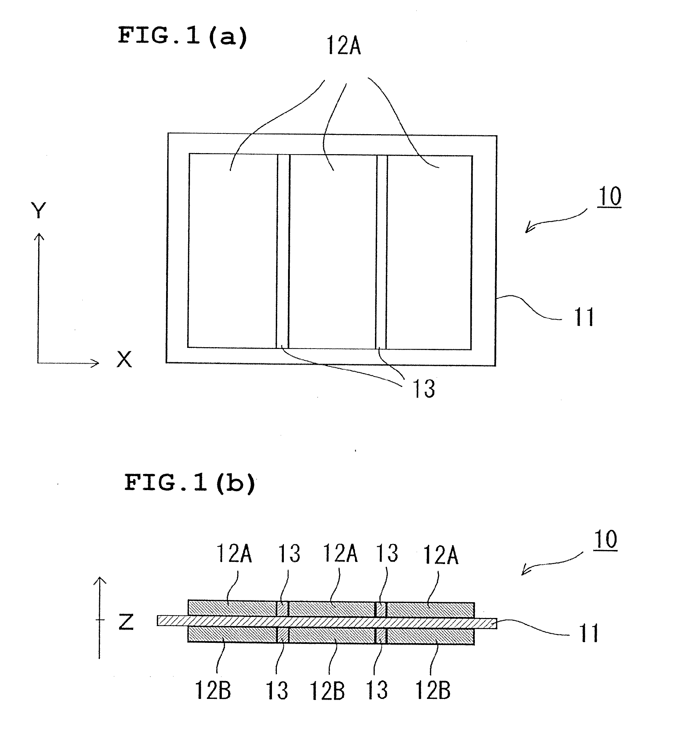

FIG. 1(a) is a plan view showing a schematic construction of an example of the electrode structure according to the embodiment of the present invention, and FIG. 1(b) is a cross-sectional view showing the schematic construction of the electrode structure according to the embodiment of the present invention.
As shown in FIG. 1(a) and 1(b), electrode structure 10 includes substrate 11 as a current collector, positive electrode active material layer 12A and negative electrode active material layer 12B which cooperate to act as electrode active material layer 12, and high resistance member 13.
Positive electrode active material layer 12A is formed on one of opposite main surfaces of substrate 11, and divided into three regions. Similarly, negative electrode active material layer 12B is formed on the other of the opposite main surfaces of substrate 11, and divided into three regions. High resistance member 13 is formed on parting portions on the one of opposite main surfaces of substrate 11 which are disposed between adjacent two regions of the divided three regions of positive electrode active material layer 12A. High resistance member 13 is also formed on parting portions on the other of the opposite main surfaces of substrate 11 which are disposed between adjacent two regions of the divided three regions of negative electrode active material layer 12B. A part of substrate 11 is exposed outside at the respective parting portions, and contacted with high resistance member 13.
In addition, this electrode structure is constructed such that a positive electrode is formed on one of opposite main surfaces of a substrate as a current collector and a negative electrode is formed on the other of the opposite main surfaces of the substrate, and is a generally so-called bipolar electrode.

Respective parts of the electrode structure of the embodiment are explained in detail.

### (Substrate)

Substrate 11 is not particularly limited to a specific one as long as it acts as a current collector. A metal foil or a film containing a conductive resin layer can be used for substrate 11.
Examples of the metal foil are an aluminum foil, a copper foil, a nickel foil, a stainless steel foil, a platinum foil, etc.
Examples of the film containing a conductive resin layer are composite conductive plastic films which are formed by adding a conductive material containing an inorganic substance as a main component to a resin that acts as a binder.
Specific examples of the film containing a conductive resin layer are those films which are formed of a metal powder or a carbon powder, and a binder. Examples of the metal powder include powders of aluminum, copper, titanium, nickel, stainless steel (SUS), and alloys of these metals. Examples of the carbon powder include powders of graphite or hard carbon. A current collector forming metal paste that contains the metal powder or the carbon powder as a main component, a resin as a binder, and a solvent, is molded under heating to thereby produce the film containing a conductive resin layer. These metal powders and carbon powders may be used alone or in the form of a mixture of any two or more thereof. Further, the binder is not particularly limited to a specific one. For instance, conventionally known binder materials such as polyethylene, epoxy resin, etc., may be used as the binder, but the binder is not limited to these binder materials. That is, conductive polymers such as polyacetylene, polypyrrole, polythiophene, polyaniline, etc., may be used as the binder. Further, in a case where the substrate is formed by a thin film forming technology such as spray coating, the substrate can be formed by laminating multiple layers which are different in kinds of metal powders incorporated therein from each other by taking advantage of the feature of the thin film forming method.
Further, the current collector containing a conductive resin layer may be formed of a conductive polymer such as polyacetylene, polypyrrole, polythiophene, polyaniline, etc.

A thickness of the substrate is not particularly limited to a specific value, but ordinarily the thickness may be about 1 to 100 µm.

### (Positive Electrode Active Material Layer)

Examples of a material for positive electrode active material layer 12A include a positive electrode active substance, a porous retainer material as explained later in detail, a conduction auxiliary agent, etc.
Examples of the preferred positive electrode active substance include a composite oxide of lithium and transition metal (a lithium-transition metal composite oxide) which is a component of a general lithium ion battery. Specific examples of the lithium-transition metal composite oxide include a Li-Mn based composite oxide such as LiMnO₂, LiMn₂O₄, etc., a Li-Co based composite oxide such as LiCoO₂, a Li-Cr based composite oxide such as Li₂Cr₂O₇, Li₂CrO₄, etc., a Li-Ni based composite oxide such as LiNiO₂, a Li-Fe based composite oxide such as LiₓFeO_{y}, LiFeO₂ etc., a Li-V based composite oxide such as LiₓV_{y}O_{z}, and a composite oxide formed by substituting other elements for a part of these transition metals (for instance, LiNiₓCo₁₋ₓO₂ (0<x<1)). In the present invention, the positive electrode active substance can be thus selected from Li metal oxides, but the positive electrode active substance is not limited to these materials. The lithium-transition metal composite oxide is an inexpensive material that is excellent in reactivity and cycle durability. Therefore, these materials can be advantageously used for an electrode. In such a case, it is possible to provide a secondary battery having excellent output characteristics. In addition, a phosphate compound of transition metal and lithium such as LiFePO_{4,} an oxide and a sulfide thereof (such as V₂O₅, MnO₂, TiS₂, MoS₂), and a transition metal oxide such as MoO₃, PbO₂, AgO, NiOOH may also be used.

In particular, when the Li-Mn-based composite oxide is used as the positive electrode active substance, an inclined voltage-SOC profile can be obtained. As a result, a state of charge (SOC) of the battery can be determined by measurement of voltage, and therefore, reliability of the battery can be enhanced.

An example of the porous retainer material is a nonwoven fabric as a fiber structure in which a plurality of voids are formed.
The porous retainer material includes the positive electrode active substance, etc., and can act as a three-dimensional skeleton of the positive electrode active material layer. The positive electrode active substance is included in the porous retainer material such as the nonwoven fabric, so that Young's modulus of the positive electrode active material layer is increased to thereby suppress deterioration in battery performance due to expansion and shrinkage of the active substance upon deterioration in durability, and prolong a duration of the battery performance. A ratio of voids of the nonwoven fabric is not particularly limited to a specific value, but is preferably in the range from 60% to 98%, and more preferably in the range from 90% to 98%. A basis weight (metsuke) of the nonwoven fabric is preferably in the range from 5 g/m² to 30 g/m². The diameter of a fiber of the nonwoven fabric is not particularly limited to a specific value, but is preferably in the range from 10 µm to 100 µm. The nonwoven fabric serves as a three-dimensional skeleton, and in a case where the nonwoven fabric does not directly contribute to charge/discharge of the battery, the nonwoven fabric can realize a high volumetric energy density by reducing a proportion of the fibers present in the electrode layer. The nonwoven fabric itself also can directly contribute to charge/discharge of the battery. The term "ratio of voids" means a ratio of a total volume of internal voids to a whole volume of an objective member (the nonwoven fabric in this embodiment) which includes the total volume of internal voids, before other materials such as the positive electrode active substance, etc. are contained in the objective member.

The nonwoven fabric is formed in a state in which the fibers are stacked on each other in directions different from each other. A conductive resin material is preferably used for the nonwoven fabric. An example of the conductive resin material is formed by coating fibers made of a resin such as polypropylene, polyethylene, polyethylene terephthalate, cellulose, nylon, etc. with a conductive material such as a carbon, or formed by containing the conductive material as a filler in the fibers.

It is preferred that the ratio of voids on the side of one surface of the nonwoven fabric which is contacted with the substrate is larger than the ratio of voids on the side of the opposite surface of the nonwoven fabric which is contacted with the electrolyte layer. With this construction, the nonwoven fabric can have a volume ratio of the fibers present in the electrode layer which is increased on the side of the opposite surface contacted with the electrolyte layer.

The ratio of voids of the nonwoven fabric can be changed at respective portions of the nonwoven fabric by varying an average diameter of the fibers depending upon the potions of the nonwoven fabric or varying an amount of the fibers per unit volume without varying the average diameter of the fibers. For instance, such a nonwoven fabric can be readily formed by injecting a resin material from nozzles to form the fibers, stacking the resin fibers until the resin fibers form a layer while adjusting an amount of the resin injected, and then curing the resin fiber layer, or can be formed by stacking a plurality of nonwoven fabrics and bonding the nonwoven fabrics to each other.

### (Negative Electrode Active Material Layer)

Examples of negative electrode active material layer 12B are a negative electrode active substance and a porous retainer material, and specifically, a crystalline carbon material and a non-crystalline carbon material. Specific examples of the negative electrode active substance are natural graphite, artificial graphite, carbon black, activated carbon, carbon fiber, coke, soft carbon, hard carbon, etc. If required, the above negative electrode active substances can be used in combination of any two or more kinds thereof. When the crystalline carbon material or the non-crystalline carbon material is used as the negative electrode active substance, an inclined voitage-SOC profile can be obtained. As a result, a state of charge (SOC) of the battery can be determined by measuring voltage, and therefore, reliability of the battery can be enhanced. This effect is remarkably exhibited in a case where the non-crystalline carbon material is used. In addition, examples of the porous retainer material for negative electrode active material layer 12B include the same materials as described above.

### (High Resistance Member)

High resistance member 13 is not particularly limited to a specific one as long as an electric resistance thereof is higher than that of an electrolyte as explained in detail later. Various kinds of materials can be applied to high resistance member 13.
Examples of the materials for high resistance member 13 include materials containing resins such as an olefin-based resin, an imide-based resin, an amide-based resin, a urethane-based resin, a fluorine-based resin, a styrene-based resin, a silicon-based resin, a cellulose-based resin, etc., or materials consisting of only these resins.
In addition, in the present invention, it should be construed that the olefin-based resin, the urethane-based resin, the fluorine-based resin, the styrene-based resin, the silicon-based resin, and the cellulose-based resin include an olefin-based rubber-like resin, a urethane-based rubber-like resin, a fluorine-based rubber-like resin, a styrene-based rubber-like resin, a silicon-based rubber-like resin, and a cellulose-based rubber-like resin, respectively. Further, in the present invention, the high resistance member may also include the above-described components, i.e., the positive electrode active material layer and the negative electrode active material layer, and further a component of the electrolyte as explained in detail later.

Further specifically, the high resistance member preferably has a heat capacity higher than that of the electrolyte as explained in detail later.
The "heat capacity" is calculated from a specific heat of respective various materials constituting the electrolyte and the high resistance member and a mass of the respective materials which is obtained when the respective materials are set in the battery. The heat capacity of the respective materials is measured using a calorimeter (for example, MultiMicro Calorimeter produced by Tokyo Riko Co., Ltd.).

In addition, the high resistance member preferably has electrolyte barrier property higher than that of the electrode active material layer.
The "electrolyte barrier property" can be determined utilizing as a reference thereof a rate of impregnation (a rate of increase in mass) of each of the electrode active material layer (the positive electrode active material layer or the negative electrode active material layer) and the high resistance member with the electrolyte in an immersion test, and air permeability of each of the electrode active material layer and the high resistance member in an air-permeability test. That is, it is preferred that the high resistance member has the rate of impregnation and the air permeability which are higher than those of the electrode active material layer.
Further, the rate of impregnation can be calculated from a rate of increase in mass of each of the electrode active material layer and the high resistance member which is measured when the electrode active material layer and the high resistance member are immersed in the corresponding electrolytes in the same conditions. Further, the air permeability of each of the electrode active material layer and the high resistance member can be calculated with a Gurley Densometer (for example, a Gurley Automatic Densometer produced by Matsubo Corporation).

Further, from the viewpoint that the substrate promotes heat radiation to thereby resist occurrence of local temperature rise in the electrode structure, it is desired that in the parting portion, a part of the substrate is exposed outside, and the high resistance member and the substrate are contacted with each other.

Furthermore, a length of a side of the parting portion on which the high resistance member is formed, is preferably in the range of from 10 mm to 30 mm, and a width of the parting portion is preferably in the range of from 0.1 mm to 1 mm. Further, a pattern of the electrode active material layer which is formed by the parting portion is not limited to a square shape or a rectangular shape, and may be a triangular shape or a hexagonal shape.

Although the electrode structure in which the high resistance member is formed on the whole parting portion between the divided portions of the positive electrode active material layer and the whole parting portion between the divided portions of the negative electrode active material layer, is illustrated by referring to the accompanying drawings, the present invention is not limited to the thus illustrated electrode structure.

Specifically, the electrode structure of the present invention can be modified in various forms as long as an electrode active material layer divided into two or more regions on a side of a surface thereof is formed on at least one of opposite main surfaces of a substrate, and a high resistance member is formed on the main surface and formed on at least a part of the parting portion between the divided portions of the electrode active material layer.
The term "side of a surface" means a surface of the electrode active material layer formed on the substrate. In addition, the expression "divided into two or more regions" means that a parting portion constituted of one or more grooves or clearances is formed on the surface of the electrode active material layer.

For instance, there is a modification in which the positive electrode active material layer or the negative electrode active material layer which is divided into two or more regions, is formed on both of opposite main surfaces of the substrate, and the high resistance member is formed on the whole parting portion between the divided regions of the positive active material layer or the negative electrode active material layer on the main surfaces.

Further, for instance, there is a modification in which the positive electrode active material layer or the negative electrode active material layer which is divided into two or more regions, is formed on one of the opposite main surfaces of the substrate, and the high resistance member is formed on the whole parting portion between the divided regions of the positive active material layer or the negative electrode active material layer on the main surface. Such a modification can be further modified such that different kinds or same kinds of electrode active material layers that are not divided into regions, are formed on the other of the opposite main surfaces of the substrate.

Further, for instance, the electrode structure of the above-described embodiment can be modified such that the high resistance member is formed on a part of the parting portion between the divided regions of the positive active material layer or the negative electrode active material layer.
The term "part of the parting portion" means a part of the parting portion in a plane surface direction of the parting portion or in a thickness direction of the parting portion, and should be construed that the part of the parting portion includes a part of the parting portion in the plane surface direction of the parting portion and a part of the parting portion in the thickness direction of the parting portion. The plane surface direction is a direction that can be indicated by XY coordinates as shown in FIG. 1(a). The thickness direction is a direction that can be indicated by Z coordinate as shown in FIG. 1(b).
A specific example of a case where the high resistance member is formed on a part of the parting portion in the plane surface direction, is as follows. In a case where there are a parting portion parallel to X axis and a parting portion parallel to Y axis, the high resistance member can be formed on only the parting portion parallel to the X axis. In addition, a specific example of a case where the high resistance member is formed on a part of the parting portion in the thickness direction, is as follows. In a case where there is a parting portion parallel to X axis, the high resistance member can be formed over the whole region of the parting portion and formed in a region extending to a half of the thickness of a parting portion in a direction of Z axis.

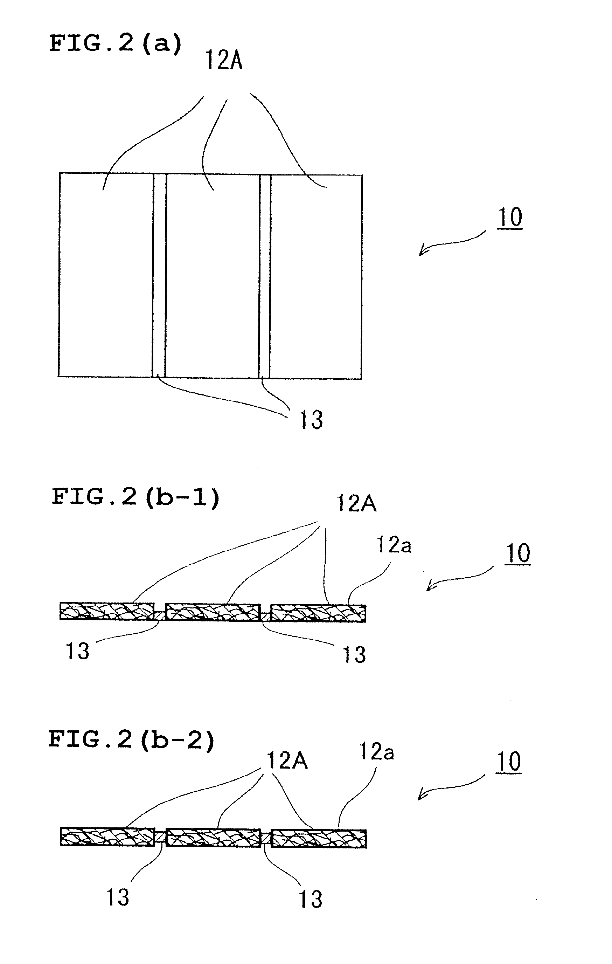

FIG. 2(a) is a plan view showing a schematic construction of other examples of the electrode structure according to the embodiment of the present invention, and FIG. 2(b-1) and FIG. 2(b-2) are cross-sectional views showing schematic constructions of the other examples of the electrode structure according to the embodiment of the present invention. Like reference characters denote like parts, and therefore, detailed explanations therefor are omitted. As shown in FIGS. 2(a), 2(b-1) and 2(b-2), electrode structure 10 includes positive active material layer 12A containing porous retainer material 12a, and high resistance member 13.
Positive electrode active material layer 12A are divided into three regions. High resistance member 13 is formed on parting portions between adjacent two regions of the divided three regions of positive electrode active material layer 12A. High resistance member 13 and porous retainer material 12a are connected with each other in the parting portions. The electrode structures respectively shown in FIGS. 2(b-1) and 2(b-2) can be suitably produced by adjusting a production conditions, etc. as explained later.

An example of porous retainer material 12a is a nonwoven fabric as a fiber structure in which a plurality of voids are formed.
The porous retainer material includes the positive electrode active substance, and can act as a three-dimensional skeleton of the positive electrode active material layer. The positive electrode active substance is included in the porous retainer material such as the nonwoven fabric, so that Young's modulus of the positive electrode active material layer is increased to thereby suppress deterioration in battery performance due to expansion and shrinkage of the active substance upon deterioration in durability, and prolong a duration of the battery performance. A ratio of voids of the nonwoven fabric is not particularly limited to a specific value, but is preferably in the range of from 60% to 98%, and more preferably in the range of from 90% to 98%. A basis weight (metsuke) of the nonwoven fabric is preferably in the range from 5 g/m² to 30 g/m². The diameter of a fiber of the nonwoven fabric is not particularly limited to a specific value, but is preferably in the range of from 10 µm to 100 µm. The nonwoven fabric serves as a three-dimensional skeleton, and in a case where the nonwoven fabric does not directly contribute to charge/discharge of the battery, the nonwoven fabric can realize a high volumetric energy density by reducing a proportion of the fibers present in the electrode layer. The nonwoven fabric itself also can directly contribute to charge/discharge of the battery. The term "ratio of voids" means a ratio of a total volume of internal voids to a whole volume of an objective member (the nonwoven fabric in this embodiment) which includes the total volume of internal voids, before other materials such as the positive electrode active substance, etc. are contained in the objective member.

The nonwoven fabric is formed in a state in which the fibers are stacked on each other in directions different from each other. A conductive resin material is preferably used for the nonwoven fabric. An example of the conductive resin material is formed by coating fibers made of a resin such as polypropylene, polyethylene, polyethylene terephthalate, cellulose, nylon, etc. with an electric conductive material such as a carbon, or formed by containing the conductive material as a filler in the fibers.

It is preferred that the ratio of voids on the side of one surface of the nonwoven fabric which is contacted with the substrate is larger than the ratio of voids on the side of the opposite surface of the nonwoven fabric which is contacted with the electrolyte layer. With this construction, the nonwoven fabric can have a volume ratio of the fibers which is increased on the side of the opposite surface contacted with the electrolyte layer.

The ratio of voids of the nonwoven fabric can be changed at respective portions of the nonwoven fabric by varying an average diameter of the fibers depending upon the portions of the nonwoven fabric or varying an amount of the fibers per unit volume without varying the average diameter of the fibers. For instance, such a nonwoven fabric can be readily formed by injecting a resin material from nozzles to form the fibers, stacking the resin fibers until the resin fibers form a layer while adjusting an amount of the resin injected, and then curing the resin fiber layer, or can be formed by stacking a plurality of nonwoven fabrics and bonding the nonwoven fabrics to each other.

### [Method for Producing Electrode Structure]

The method for producing an electrode structure according to an embodiment of the present invention includes the following steps (1)-(3). Step (1): forming a high resistance member having an electric resistance higher than that of an electrolyte on a transfer substrate, the high resistance member serving to form a parting portion.
Step (2): subjecting a substrate to transfer of the high resistance member formed on the transfer substrate.
Step (3): applying a slurry for forming an electrode active material layer to a portion of the substrate subjected to transfer of the high resistance member, the portion of the substrate having no high resistance member transferred.

In the method for producing an electrode structure according to the present invention, formation of the parting portion can be ensured as compared to formation of the parting portion by intermittent application of a conventional method for producing an electrode structure. Therefore, it is possible to readily produce the electrode structure as described above. Further, the electrode structure obtained by the method of the present invention includes the high resistance member having an electric resistance higher than that of an electrolyte, the high resistance member being formed on at least a part of the parting portion between divided portions of the electrode active material layer. With this construction, for instance, even if an internal short circuit occurs in a battery, it is possible to suppress a flow of current passing through an electrolyte and suppress or prevent occurrence of local temperature rise due to the flow of current. Accordingly, when such an electrode structure is used, it is possible, for example, to enhance long-term reliability such as cycle characteristic of a bipolar secondary battery.

The respective steps will be explained in detail hereinafter.

### (Step 1)

In the step 1, a high resistance member that has an electric resistance higher than that of an electrolyte and serves to form a parting portion, is formed on a transfer substrate. The above-described materials for the high resistance member can be suitably used. The electrolyte will be explained in detail later.
Further, although the high resistance member is not particularly limited to a specific one, it is desirable to use, for instance, a film-like high resistance member having a previously formed grid pattern for a parting portion thereon.
The transfer substrate is not particularly limited to a specific one as long as the high resistance member can be transferred therefrom onto a substrate. For example, polypropylene, polyethylene, polystyrene, etc., can be suitably used as a material of the transfer substrate.

### (Step 2)

In the step 2, the high resistance member formed on the transfer substrate is transferred onto a substrate.
The above-described materials for the substrate can be suitably used. In a case where the slurry for forming the electrode active material layer as explained later contains water that acts as a solvent or a water-based binder, it is desirable to use the high resistance member formed of a hydrophobic resin.
The term "hydrophobic resin" means a resin such as an olefin-based resin, an imide-based resin, an amide-based resin, a urethane-based resin, a fluorine-based resin, a styrene-based resin, a silicon-based resin, etc., which is hardly wettable with water as a solvent. Generally, many of resins containing an acryl group or an ester group are not a hydrophobic resin.
In the present invention, the expression "hardly wettable with water" means that a contact angle between the hydrophobic resin and water is not smaller than 90 degrees. Further, upon transferring, a suitable transfer method using pressure or heat can be adopted. Further, the substrate and the high resistance member may be directly adhered to each other or fused with each other, and may be bonded to each other through an adhesive such as an epoxy-based adhesive, an olefin-based adhesive, a polyimide-based adhesive, etc.

### (Step 3)

In the step 3, the slurry for forming the electrode active material layer is applied to a portion of the substrate subjected to transfer of the high resistance member, the portion of the substrate having no high resistance member transferred.
Conventionally known materials can be used for preparing the slurry for forming the electrode active material layer as long as the resulting slurry can form the above-described electrode active material layer. However, in a case where the high resistance member formed of a hydrophobic resin is used, a material containing water that act as a solvent or a water-based binder is desirably used for preparing the slurry for forming the electrode active material layer. If the slurry for forming the electrode active material layer is used, the high resistance member formed of a hydrophobic resin repels the slurry for forming the electrode active material layer, so that it is possible to carry out not intermittent application but application of the slurry over a whole surface of the substrate. As a result, formation of the electrode active material layer can be ensured.

In the following, the method for producing an electrode structure according to the embodiment of the present invention is explained in detail by referring to the accompanying drawings.

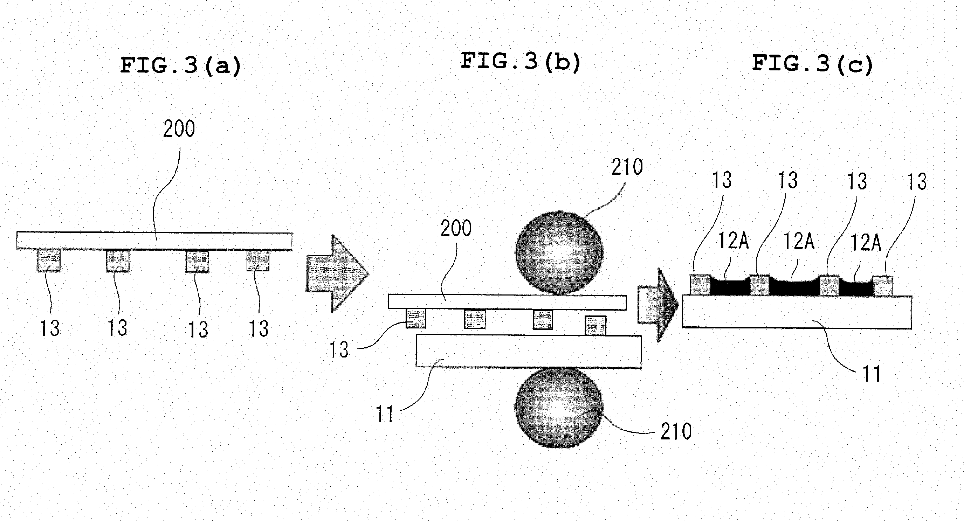

FIGS. 3(a)-3(c) are explanatory diagrams showing one example of the method for producing an electrode structure according to the embodiment of the present invention. Like reference characters denote like parts, and therefore, detailed explanations therefor are omitted.
In the step 1 as shown in FIG. 3(a), film-like high resistance member 13 that is formed with a parting portion pattern is disposed on transfer substrate 200. Although it is not shown in FIG. 3(a), an adhesive may be applied onto one side of the high resistance member which is opposed to a substrate.
In the step 2 as shown in FIG. 3(b), a pressure is applied to transfer substrate 200 by rollers 210 or the like, so that high resistance member 13 formed on transfer substrate 200 is transferred onto substrate 11.
In the step 3 as shown in FIG. 3(c), a slurry for forming the positive electrode active material layer is applied to a portion of substrate 11 subjected to transfer of high resistance member 13, the portion of substrate 11 having no high resistance member 13 transferred, and then the thus applied slurry for forming the positive electrode active material layer is dried to thereby form positive electrode active material layer 12A.
Thus, the electrode structure can be obtained.

Further, the other example of the method for producing an electrode structure, according to the embodiment of the present invention includes the following steps (1') and (2').
Step (1'): heating and/or compressing a part of a porous retainer material to form a high resistance member having an electric resistance higher than that of an electrolyte, the high resistance member serving to form a parting portion. Step (2'): impregnating a slurry for forming an electrode active material layer into a portion of the porous retainer material in which no high resistance member is formed.

In the other example of the method for producing an electrode structure according to the embodiment of the present invention, formation of the parting portion can be ensured as compared to formation of the parting portion by intermittent application of a conventional method for producing an electrode structure. Therefore, it is possible to readily produce the electrode structure as described above. Further, the electrode structure obtained by the above method includes the high resistance member having an electric resistance higher than that of an electrolyte, which is formed on at least a part of the parting portion between divided portions of the electrode active material layer. With this construction, for instance, even if an internal short circuit occurs in a battery, it is possible to suppress a flow of current passing through an electrolyte and suppress or prevent occurrence of local temperature rise due to the flow of current. Accordingly, when such an electrode structure is used, it is possible to enhance long-term reliability such as cycle characteristic of a bipolar secondary battery.

The respective steps will be explained in detail hereinafter.

### (Step 1')

In the step 1', a high resistance member having an electric resistance higher than that of an electrolyte is formed by subjecting a part of a porous retainer material to treatments such as heating and compression, the high resistance member serving to form a parting portion.
By conducting this step, the high resistance member and the porous retainer material can be bound to each other. As a result, a subsidiary effect of increasing a strength can be attained. In addition, after that, when the electrode structure is joined to a substrate, the production efficiency can be enhanced owing to the increased strength of the electrode structure. Further, upon conducting this step, the high resistance member and the porous retainer material can be formed of the same kind of material.

### (Step 2')

In the step 2', a slurry for forming an electrode active material layer is impregnated into a portion of the porous retainer material in which no high resistance member is formed. Further, after the impregnation, a surplus of the thus applied slurry for forming an electrode active material layer is scraped off, and then the slurry for forming the electrode active material layer which is impregnated into the portion of the porous retainer material is dried.
By conducting this step, after drying both surfaces of the electrode structure, the electrode structure can be joined to the substrate. Therefore, it is possible to more readily produce the electrode structure.

In the following, the other example of the method for producing an electrode structure, according to the embodiment of the present invention is explained in detail by referring to the accompanying drawings.

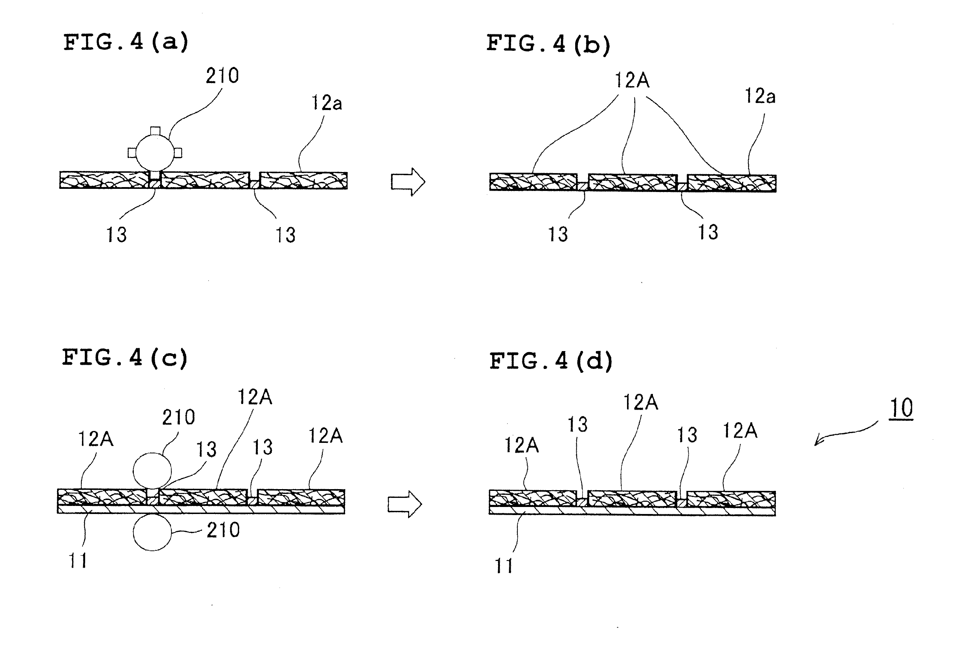

FIGS. 4(a)-4(d) are explanatory diagrams showing the other example of the method for producing an electrode structure according to the embodiment of the present invention. Like reference characters denote like parts, and therefore, detailed explanations therefor are omitted. In the step 1' as shown in FIG. 4(a), a high resistance member that has an electric resistance higher than that of an electrolyte and serves to form a parting portion is formed by applying a pressure to a part of a nonwoven fabric as an example of porous retainer material 12a by a roller 210 having a pattern thereon which is heated to a high temperature.
In the step 2' as shown in FIG. 4(b), a slurry for forming a positive electrode active material layer is applied to a portion of porous retainer material 12a in which no high resistance member was formed, and the thus applied slurry for forming a positive electrode active material layer is dried to thereby form positive electrode active material layer 12A. Thus, another electrode structure can be obtained.
Further, in the step 3' as shown in FIG. 4(c), a pressure is applied to the electrode structure and substrate 11 by rollers 210, etc., so that the electrode structure and substrate 11 are joined to each other. Thus, electrode structure 10 as shown in FIG. 4(d) can be obtained.

### [Bipolar Battery]

A bipolar battery according to an embodiment of the present invention includes an electrolyte, and an electrode structure including a substrate, an electrode active material layer formed on both of main surfaces of the substrate and divided into a plurality of portions on a side of a surface thereof, and a high resistance member formed on a parting portion formed between the divided portions of the electrode active material layer, the high resistance member having an electric resistance higher than that of the electrolyte.
Further, the electrode active material layer formed on one of the main surfaces of the substrate of the electrode structure is a positive electrode active material layer, and the electrode active material layer formed on the other of the main surfaces of the substrate of the electrode structure is a negative electrode active material layer.

In the bipolar battery of the present invention, the high resistance member having an electric resistance higher than that of the electrolyte is formed on the parting portion formed between the divided portions of the electrode active material layer. With this construction, for instance, even in a case where an internal short circuit occurs in the battery, it is possible to suppress a flow of current passing through the electrolyte and suppress or prevent occurrence of local temperature rise. Accordingly, it is possible to enhance long-term reliability, such as cycle characteristic, of a bipolar secondary battery.

In the following, the bipolar battery according to the embodiment of the present invention is explained in detail by referring to the accompanying drawings.

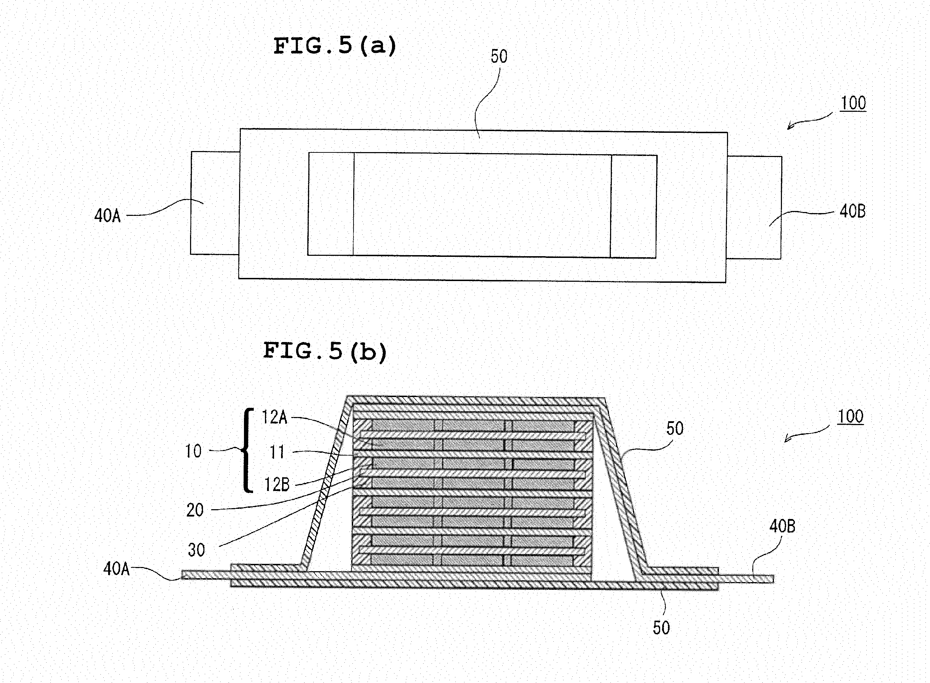

FIG. 5(a) is a plan view showing a schematic construction of an example of a bipolar battery according to the embodiment of the present invention, and FIG. 5(b) is a cross-sectional view showing a schematic construction of the bipolar battery according to the embodiment of the present invention. Like reference characters denote like parts, and therefore, detailed explanations therefor are omitted.
As shown in FIGS. 5(a)-5(b), bipolar battery 100 has a rectangular flat shape, and positive electrode tab 40A and negative electrode tab 40B are drawn from both sides of bipolar battery 100 to obtain an electric power therefrom.
A power generation element is enveloped in an exterior package material (e.g., a laminated film) 50, and a periphery thereof is heat-sealed. The power generation element is sealed in such a state that positive electrode tab 40A and negative electrode tab 40B are drawn from the power generation element.

The power generation element has a structure in which electrode structures 10 as described above are stacked on each other via separator 20. Further, in the stacked electrode structures 10, positive electrode active material layer 12A of one of electrode structures 10 and negative electrode active material layer 12B of the other of electrode structures 10 are opposed to each other, and a parting portion of one of electrode structures 10 and a parting portion of the other of electrode structures 10 are opposed to each other. Further, high resistance member 13 is formed on each of the parting portions. Further, there is provided seal member 30 that retains an electrolyte contained in the separator and the electrode active substance.
Meanwhile, separator 20, positive electrode active material layer 12A, and negative electrode active material layer 12B contain an electrolyte (not shown).

With this construction, for instance, even in a case where an internal short circuit occurs in the battery, it is possible to suppress a flow of current passing through the electrolyte and suppress or prevent occurrence of local temperature rise. Accordingly, it is possible to enhance long-term reliability, such as cycle characteristic, of a bipolar secondary battery.

### (Electrolyte)

Examples of the electrolyte are an electrolyte solution, a solid polymer electrolyte, a polymer gel electrolyte, and a laminate of a solid polymer electrolyte and a polymer gel electrolyte, etc. The electrolyte solution (an electrolyte salt and a plasticizer) is not particularly limited to a specific one, and may be one usually used in a lithium ion battery. For example, these electrolyte solutions containing a lithium salt (an electrolyte salt) and an organic solvent (a plasticizer) may be used. The lithium salt (an electrolyte salt) is at least one salt selected from the group consisting of inorganic acid anion salts such as LiPF₆, LiBF4, LiClO₄, LiAsF₆, LiTaF₆, liAlCl₄, Li₂B10Cl₁₀ or the like; and organic acid anion salts such as LiCF₃SO₃, Li (CF₃SO₂)₂N, Li (C₂F₅SO₂) ₂N₂ or the like. The organic solvent (a plasticizer) is at least one aprotic solvent or the like which is selected from the group consisting of cyclic carbonates such as propylene carbonate, ethylene carbonate and the like; chain carbonates such as dimethyl carbonate, methyl ethyl carbonate, diethyl carbonate and the like; ethers such as tetrahydrofuran, 2-methyltetrahydrofuran, 1,4-dioxane, 1,2-dimethoxyethane, 1,2-dibutoxyethane and the like; lactones such as γ-butyrolactone and the like; nitrites such as acetrnitrile and the like; esters such as methyl propionate and the like; amides such as dimethylformamide and the like; methyl acetate, and methyl formate which may also be used in the form of a mixture of any two or more thereof, although not particularly limited thereto.
The polymer gel electrolyte is not particularly limited to a specific one. The ratio (a mass ratio) of a polymer forming the polymer gel electrolyte to an electrolyte solution contained therein is preferably in the range of from 20:80 to 98:2.
The polymer gel electrolyte includes a solid polymer electrolyte having an ion conductivity and an electrolyte solution as usually utilized in a lithium ion battery. Further, the polymer gel electrolyte may include those retaining the electrolyte solution within a polymer matrix having no lithium ion conductivity.
Examples of the polymer that is used in the polymer gel electrolyte and has no lithium ion conductivity, may include polyvinyliden fluoride (PVdF), polyvinyl chloride (PVC), polyacrylonitrile (PAN), polymethylmethacrylate (PMMA) and the like, although not particularly limited to these compounds. Further, although PAN and PMMA belong to the polymer having a very weak ion conductivity, they may also be regarded as the polymer having an ion conductivity. However, PAN and PMMA are exemplified herein as the polymer that is used in the polymer gel electrolyte and has no lithium ion conductivity.

### (Separator)

Separator 20 is formed of a material having many fine pores, for instance, a porous resin, a nonwoven fabric formed of entwined resin fibers, etc.

### (Seal Member)

In order to prevent liquid leakage of an electrolyte from an outer periphery of the seal member, seal member 30 is formed of a material that retains an electrolyte contained in the separator and the electrode active substance. Specific examples of the material used for the seal member include general-use plastics such as polypropylene (PP), polyethylene (PE): polyurethanes; polyamide-based resin (such as, for example, nylon 6 and nylon 66 ("nylon" is a registered trademark, similarly defined hereinafter)); polytetrafluoroethylene (PTFE), polyvinyliden fluorid, polystyrene and the like, and thermoplastic olefin rubbers. Further, silicone rubbers may also be used.

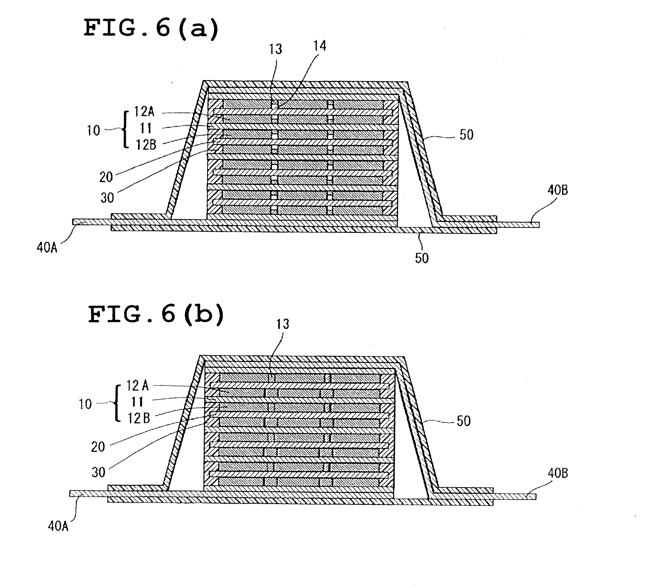

FIG. 6(a) is a cross-sectional view showing a schematic construction of the other example of the bipolar battery according to the embodiment of the present invention. Like reference characters denote like parts, and therefore, detailed explanations therefor are omitted.

As shown in FIG. 6(a), the other example of the bipolar battery differs from the above-described example of the bipolar battery in construction of a high resistance member thereof.
Specifically, in the other example of the bipolar battery, the high resistance member is formed in a part of the parting portion, and electrolyte 14 is filled in a space formed as a remaining part of the parting portion.

With this construction, for instance, even in a case where an internal short circuit occurs in the battery, it is possible to suppress a flow of current passing through the electrolyte and suppress or prevent occurrence of local temperature rise. Accordingly, it is possible to enhance long-term reliability, such as cycle characteristic, of a bipolar secondary battery.

FIG. 6(b) is a cross-sectional view showing a schematic construction of a further example of the bipolar battery according to the embodiment of the present invention. Like reference characters denote like parts, and therefore, detailed explanations therefor are omitted.

As shown in FIG. 6(b), the further example of the bipolar battery differs from the above-described one example of the bipolar battery in construction of a high resistance member thereof.
Specifically, in the further example of the bipolar battery, such a relationship that an area of a surface of each of negative electrode active material layers 12B is larger than an area of a surface of each of positive electrode active material layers 12A is fulfilled.

With this construction, for instance, even in a case where an internal short circuit occurs in the battery, it is possible to suppress a flow of current passing through the electrolyte and suppress or prevent occurrence of local temperature rise. Accordingly, it is possible to enhance long-term reliability, such as cycle characteristic, of a bipolar secondary battery.
In addition, lithium ion from the side of the positive electrode can be efficiently absorbed and trapped, and therefore, charge/discharge efficiency can be enhanced.

### EXAMPLES

In the following, the present invention is explained in detail with reference to Examples and Comparative Examples. However, the present invention is not limited to the following Examples.

### (Example 1-1)

### <Production of Current Collector>

A carbon material was dispersed in polyethylene, and then the resulting dispersion was stretched and formed into a film having a thickness of 100 µm, thereby preparing a current collector including an electric conductive resin layer. Further, in the subsequent step, the thus prepared current collector was cut into a piece having a size of length 90 mm x width 140 mm and a seal allowance of 10 mm in a peripheral portion thereof.

### <Production of Bipolar Electrode>

A slurry for forming a positive electrode active material layer was prepared by blending 85 parts by mass of lithium manganese oxide (LiMn₂O₄) as a positive electrode substance, 5 parts by mass of acetylene black as a conductive agent, 10 parts by mass of polyvinyliden fluoride (PVdF) as a binder, and N-methyl-pyrollidone (NMP) as a slurry viscosity adjusting solvent.
Next, the thus prepared slurry for forming a positive electrode active material layer was applied to one surface of the current collector by an intermittent application method using a doctor blade.
Subsequently, a portion of the one surface of the current collector which had the applied slurry for forming a positive electrode active material layer was masked with a polyethylene terephthalate film, and PVdF-containing NMP (PVdF concentration: 10 mass %) for forming a high resistance member was applied to a portion of the one surface of the current collector to which no slurry for forming a positive electrode active material layer was applied.
After that, the slurry applied to the one surface of the current collector was dried and pressed, so that the positive electrode material layer (length 70 mm x width 36 mm x thickness 60 µm; three portions) and the high resistance member (length 70 mm x width 6 mm x thickness 60 µm; two portions) as shown in FIGS. 1(a)-1(b) were formed.

A slurry for forming a negative electrode active material layer was prepared by blending 90 parts by mass of hard carbon as a negative electrode substance, 10 parts by mass of PVdF as a binder, and NMP as a slurry viscosity adjusting solvent.
Next, the thus prepared slurry for forming a negative electrode active material layer was applied to a surface of the current collector which was opposed to the one surface provided with the positive electrode, by an intermittent application method using a doctor blade.
Subsequently, a portion of the opposite surface of the current collector which had the applied slurry for forming a negative electrode active material layer was masked with a polyethylene terephthalate film, and then NMP containing PVdF (PVdF concentration: 10 mass %) for forming a high resistance member was applied to a portion of the opposite surface of the current collector to which no slurry for forming a negative electrode active material layer was applied.
After that, the slurry applied to the opposite surface of the current collector was dried and pressed, so that the negative electrode substance layer (length 70 mm x width 36 mm x thickness 50 µm; three portions) and the high resistance member (PVdF; length 70 mm x width 6 mm x thickness 50 µm; two portions) as shown in FIGS. 1(a)-(b) were formed.
Thus, the bipolar electrode structure as shown in FIGS. 1(b) was prepared.

Further, a positive electrode active material layer (length 70 mm x width 36 mm x thickness 60 µm; three portions) and the high resistance member (PVdF; length 70 mm x width 6 mm x thickness 60 µm; two portions) were formed on one surface of a current collector by the same method as used for preparation of the bipolar electrode structure, thereby producing a positive electrode structure. Further, a negative electrode active material layer (length 70 mm x width 36 mm x thickness 60 µm; three portions) and the high resistance member (PVdF; length 70 mm x width 6 mm x thickness 60 µm; two portions) were formed on one surface of a current collector by the same method as used for preparation of the bipolar electrode structure except that the positive electrode structure was not provided on an opposite surface of the current collector, thereby producing a negative electrode structure.

### <Production of Electrolyte>

Lithium phosphate hexafluoride (LiPF₆) as an electrolyte salt was dissolved in a non-aqueous solvent containing ethylene carbonate (EC) and dimethyl carbonate (DEC) at a ratio (volume ratio) of EC:DEC = 1:1 such that the concentration of LiPF₆ was 1 mol/l, thereby preparing a non-aqueous electrolyte solution.

### <Production of Bipolar Battery>

A seal member formed of a polyethylene seal film was placed around the positive electrode active material layer and the negative electrode active material layer of each of the obtained three kinds of electrode structures, that is, the bipolar electrode structure, the positive electrode structure and the negative electrode structure. Then, the electrode structures were arranged in a stacked state such that the positive electrode active material layer of one of the electrode structures and the negative electrode active material layer of the other of the electrode structures were opposed to each other, and the parting portions of the one of the electrode structures and the parting portions of the other of the electrode structures were opposed to each other. Next, three sides as sealing portions of each of the layers except for a liquid injection side thereof were subjected to pressing from upper and lower sides thereof (pressing pressure: 0.2 MPa; pressing temperature: 140°C; pressing time: 5 seconds), so that the seal members were fused together to thereby seal the layers so as to form a bag shape that was opened at only the liquid injection side of each of the layers.
Subsequently, the non-aqueous electrolyte solution was injected into each of the layers through the liquid injection side thereof, and the respective seal members were vacuum-sealed.
After that, the power generation element was sandwiched between strong electric terminals which were each in the form of an aluminum plate capable of covering a whole plane of projection of the power generation element. The aluminum plate had a size of length 80 mm x width 130 mm x thickness 100 µm and had a part extending up to an outside of the plane of projection of the power generation element. The strong electric terminals and the power generation element sandwiched therebetween were vacuum-sealed and wholly covered with an aluminum laminate film, and pressed from both surface sides thereof at atmospheric pressure to thereby enhance contact between the strong electric terminals and the power generation element. Thus, the bipolar battery of Example 1-1 as shown in FIGS. 5(a)-5(b) was obtained.

### (Example 1-2)

The same procedure as in Example 1-1 was repeated except that a polypropylene (PP) film (thickness 20 µm) for forming a high resistance member was placed on a portion of one surface of the current collector to which no slurry for forming a positive electrode active material layer was applied and a portion of the opposite surface of the current collector to which no slurry for forming a negative electrode active material layer was applied, so that the positive electrode active material layer (length 70 mm x width 36 mm x thickness 60 µm; three portions) and the high resistance member (PP; length 70 mm x width 6 mm x thickness 20 µm; two portions) and the negative electrode active material layer (length 70 mm x width 36 mm x thickness 50 µm; three portions) and the high resistance member (PP; length 70 mm x width 6 mm x thickness 20 µm; two portions) as shown FIGS. 1(a)-1(b) were formed. Thus, the bipolar battery of Example 1-2 as shown in FIG. 6(a) was obtained.

### (Example 1-3)

The same procedure as in Example 1-1 was repeated except that a polypropylene (PP) film (thickness 60 µm or 50 µm) for forming a high resistance member was placed on a portion of one surface of the current collector to which no slurry for forming a positive electrode active material layer was applied and a portion of the opposite surface of the current collector to which no slurry for forming a negative electrode active material layer was applied, so that the positive electrode active material layer (length 70 mm x width 36 mm x thickness 60 µm; three portions) and the high resistance member (PP; length 70 mm x width 6 mm x thickness 60 µm; two portions) and the negative electrode active material layer (length 70 mm x width 36 mm x thickness 50 µm; three portions) and the high resistance member (PP; length 70 mm x width 6 mm x thickness 50 µm; two portions) as shown FIGS. 1(a)-1(b) were formed. Thus, the bipolar battery of Example 1-3 as shown in FIGS. 5(a)-5(b) was obtained.

### (Example 1-4)

The same procedure as in Example 1-1 was repeated except that a polypropylene (PP) film (thickness 60 µm or 50 µm) for forming a high resistance member was placed on a portion of one surface of the current collector to which no slurry for forming a positive electrode active material layer was applied and a portion of the opposite surface of the current collector to which no slurry for forming a negative electrode active material layer was applied, so that the positive electrode active material layer (length 70 mm x width 34 mm x thickness 60 µm at three portions) and the high resistance member (PP; length 70 mm x width 9 mm x thickness 60 µm; two portions) and the negative electrode active material layer (length 70 mm x width 36 mm x thickness 50 µm; three portions) and the high resistance member (PP; length 70 mm x width 6 mm x thickness 50 µm; two portions) as shown FIGS. 1(a)-1(b) were formed. Thus, the bipolar battery of Example 1-4 as shown in FIG. 6(b) was obtained.

### (Comparative Example 1-1)

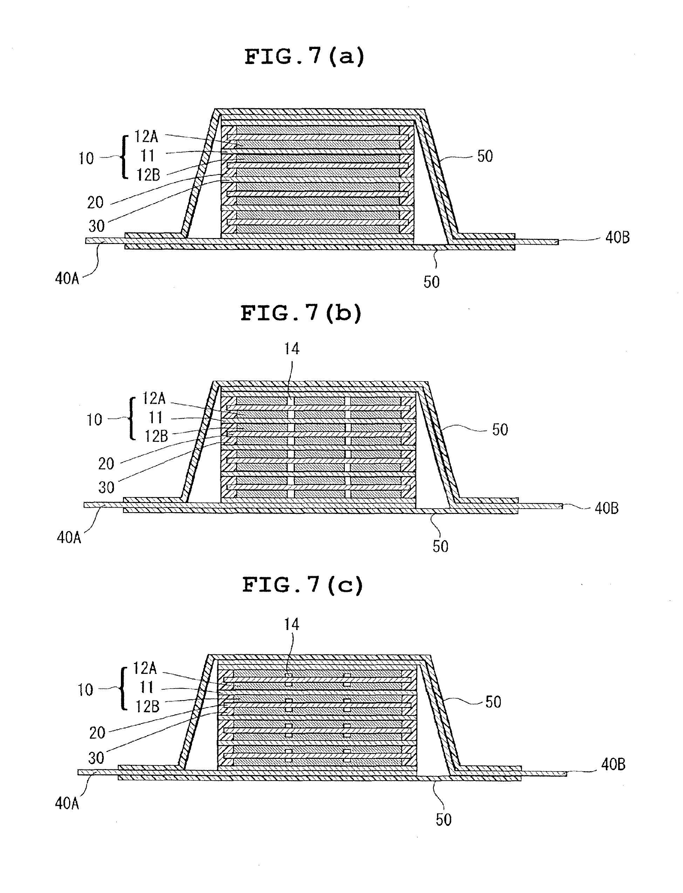

The same procedure as in Example 1-1 was repeated except that a slurry for forming a positive electrode active material layer was applied to a whole area of one surface of the current collector, and a slurry for forming a negative electrode active material layer was applied to a whole area of the opposite surface of the current collector, so that the positive electrode active material layer (length 70 mm x width 108 mm x thickness 60 µm) and the negative electrode active material layer (length 70 mm x width 108 mm x thickness 50 µm) were formed. Thus, the bipolar battery of Comparative Example 1-1 as shown in FIG. 7(a) was obtained.

### (Comparative Example 1-2)

The same procedure as in Example 1-1 was repeated except that PVdF-containing NMP (PVdF concentration: 10 mass %) for forming a high resistance member was not applied to a portion of one surface of the current collector to which no slurry for forming a positive electrode active material layer was applied and a portion of the opposite surface of the current collector to which no slurry for forming a negative electrode active material layer was applied. Thus, the bipolar battery of Comparative Example 1-2 as shown in FIG. 7(b) was obtained.

### (Comparative Example 1-3)

The same procedure as in Example 1-1 was repeated except that a portion of one surface of the current collector to which a slurry for forming a positive electrode active material layer was applied and a portion of the opposite surface of the current collector to which a slurry for forming a negative electrode active material layer was applied were masked with a polyethylene terephthalate film; and then the slurry for forming a positive electrode active material layer was applied to a portion of the one surface of the current collector to which no slurry for forming a positive electrode active material layer was applied, and the slurry for forming a negative electrode active material layer was applied to a portion of the opposite surface of the current collector to which no slurry for forming a negative electrode active material layer was applied, followed by subjecting the one surface of the current collector to drying and pressing so as to form the positive electrode substance layer (length 70 mm x width 36 mm x thickness 60 µm; three portions) and the positive electrode substance layer (length 70 mm x width 6 mm x thickness 20 µm; two portions), and subjecting the opposite surface of the current collector to drying and pressing so as to form the negative electrode substance layer (length 70 mm x width 36 mm x thickness 60 µm; three portions) and the negative electrode substance layer (length 70 mm x width 6 mm x thickness 20 µm at two portions). Thus, the bipolar battery of Comparative Example 1-3 as shown in FIG. 7(c) was obtained.

### [Evaluation of Performance]

The obtained bipolar batteries of the above respective Examples and Comparative Examples were subjected to initial charging and discharging cycle at 0.5C for 5 hours (at upper limit voltage of 4.2V in the respective layers). Next, the respective bipolar batteries of the above Examples and Comparative Examples were subjected to a charging/discharging cycle test for 100 cycles at 4.5°C to measure a capacity thereof after being stored when charged and discharged at 0.5C. The results are shown in Table 1.

**[Table 1]**

| | Capacity Retention Ratio (%) After Cycle Test |
|---|---|
| Example 1-1 | 90 |
| Example 1-2 | 92 |
| Example 1-3 | 96 |
| Example 1-4 | 98 |
| Comparative Example 1-1 | 70 |
| Comparative Example 1-2 | 80 |
| Comparative Example 1-3 | 85 |

From the results given in Table 1, it was confirmed that the batteries obtained in Example 1-1 to Example 1-4 according to the present invention in which the high resistance member having electric resistance higher than that of an electrolyte was disposed in predetermined positions exhibited an excellent cycle property and were enhanced in long-term reliability as compared to those of Comparative Example 1-1 to Comparative Example 1-3 being out of the scope of the present invention in which the high resistance member having electric resistance higher than that of an electrolyte was disposed in predetermined positions.

Further, when the capacity retention ratios of Example 1-1 and Example 1-3 as shown in Table 1 were compared to each other in Table 1, it was confirmed that the battery obtained in Example 1-3 in which the high resistance member formed by placing the polypropylene film was used exhibited a more excellent cycle property and was further enhanced in long-term reliability than that of Example 1-1 in which the high resistance member formed by coating with the PVdF solution was used. The reason therefor is considered to be that the high resistance member formed by placing the polypropylene film has a higher electrolyte barrier property.

Further, when the capacity retention ratios of Example 1-2 and Example 1-3 as shown in Table 1 were compared to each other, it was confirmed that the battery obtained in Example 1-3 in which the parting portions were hardly impregnated with the electrolyte exhibited a more excellent cycle property and was further enhanced in long-term reliability. The reason therefor is considered to be that the high resistance member formed by placing the polypropylene film on the whole parting portions is hardly infiltrated with the electrolyte and therefore has a higher heat capacity.

Further, when the capacity retention ratios of Example 1-3 and Example 1-4 as shown in Table 1 were compared to each other, it was confirmed that the battery obtained in Example 1-4 in which the surface of the negative electrode active material layer had an area larger than that of the surface of the positive electrode active material layer exhibited a more excellent cycle property and was further enhanced in long-term reliability. The reason therefor is considered to be that lithium ions from the side of the positive electrode can be efficiently absorbed and trapped to thereby enhance a charge/discharge efficiency.

### (Example 2-1)

### <Production of Current Collector>

A carbon material was dispersed in polyethylene, and then the resulting dispersion was stretched and formed into a film having a thickness of 100 µm, thereby preparing a current collector including an electric conductive resin layer. Further, in the subsequent step, the thus prepared current collector was cut into a piece having a size of length 100 mm x width 100 mm and a seal allowance of 10 mm in a peripheral portion thereof.

### <Production of Negative Electrode Structure>

A high resistance member (formed integrally with a seal member) which was formed of an olefin-based resin film having a grid-like parting pattern was placed on a transfer substrate formed of polypropylene, and then coated with an epoxy-based adhesive. The high resistance member formed of the olefin-based resin film having the grid-like parting pattern was transferred by a transfer method such that the epoxy-based adhesive was opposed to the current collector.

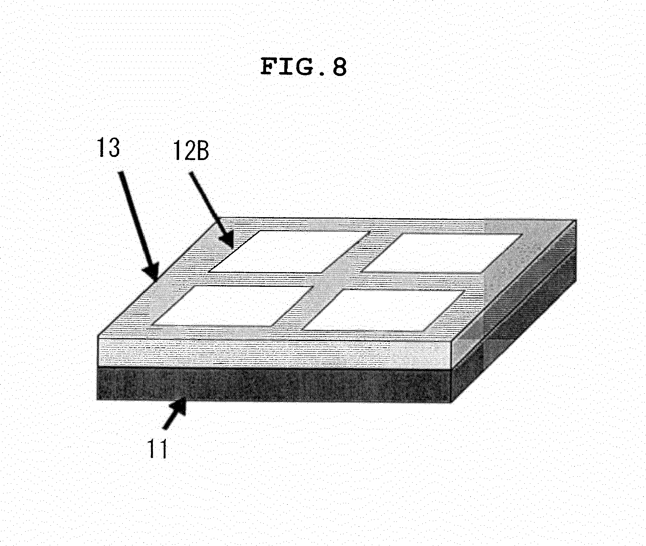

A slurry for forming a negative electrode active material layer was prepared by blending 90 parts by mass of hard carbon as a negative electrode substance, 10 parts by mass of a styrene-butadiene rubber as a binder, and water as a slurry viscosity adjusting solvent.
Next, the current collector which was formed with the high resistance member formed of the olefin-based resin film having the grid-like parting pattern was subjected to coating treatment in which the slurry for forming the negative electrode active material layer was applied over a whole surface of the current collector by a doctor blade method.
After that, the thus coated surface of the current collector was dried and pressed, thereby obtaining a negative electrode structure (a negative electrode active material layer: length 100 mm x width 100 mm x thickness 50 µm; four portions) of Example 2-1 as shown in FIG. 8.
The thus obtained negative electrode structure and a negative electrode structure having no parting portion were subjected to measurement for resistance using Loresta EP-MCPT360 (by a 4-terminal method). As a result, the obtained negative electrode structure exhibited a volume resistance value of 0.6 Ωcm which was higher by 50% than that of the negative electrode structure having no parting portion.

### (Example 2-2)

The same procedure as in Example 2-1 was repeated except that an olefin-based adhesive was used instead of the epoxy-based adhesive, thereby obtaining the negative electrode structure of Example 2-2.

### (Example 2-3)

The same procedure as in Example 2-1 was repeated except that a high resistance member formed of a polyimide-based resin film was used instead of the high resistance member formed of a polyolefin-based resin film, a polyimide-based adhesive was used instead of the epoxy-based adhesive, and a heat transfer method was used instead of the transfer method, thereby obtaining a negative electrode structure of Example 2-3.

### (Example 2-4)

The same procedure as in Example 2-1 was repeated except that a high resistance member formed of a polyimide-based resin film was used instead of the high resistance member formed of a polyolefin-based resin film, no polyimide-based adhesive was used, and a heat transfer method was used instead of the transfer method, thereby obtaining the negative electrode structure of Example 2-4.

### (Example 2-5)

The same procedure as in Example 2-1 was repeated except that a current collector formed of a copper foil was used instead of the current collector containing the conductive resin layer, thereby obtaining a negative electrode structure of Example 2-5.

### (Example 2-6)

The same procedure as in Example 2-2 was repeated except that a current collector formed of a copper foil was used instead of the current collector containing the conductive resin layer, thereby obtaining a negative electrode structure of Example 2-6.

### (Example 2-7)

The same procedure as in Example 2-3 was repeated except that a current collector formed of a copper foil was used instead of the current collector containing the conductive resin layer, thereby obtaining a negative electrode structure of Example 2-7.

### (Example 2-8)

The same procedure as in Example 2-4 was repeated except that a current collector formed of a copper foil was used instead of the current collector containing the conductive resin layer, thereby obtaining a negative electrode structure of Example 2-8.

Example 2-1 and the combination of the high resistance member and the adhesive which was utilized in Example 2-1 are preferred from the viewpoint of a volume resistance value of the obtained negative electrode structure and excellent adhesion between the current collector and the negative electrode active substance or the high resistance member.

### (Example 3-1)

### <Production of Current Collector>

A carbon material was dispersed in polyethylene, and then the resulting dispersion was stretched and formed into a film having a thickness of 100 µm, thereby preparing a current collector including a conductive resin layer. Further, in the subsequent step, the thus prepared current collector was cut into a piece having a size of length 90 mm x width 140 mm and a seal allowance of 10 mm in a peripheral portion thereof.

### <Production of Bipolar Electrode>

First, a nonwoven fabric (fiber diameter: about 20 µm, basis weight: : 20 g/m²) which was formed of a polypropylene resin and had a ratio of voids of 95% was pressed by a heat press roll having numerous fine projections to form a high resistance member at a portion thereof (see FIG. 3(a)). Next, 85 parts by mass of lithium manganese oxide (LiMn₂O₄) as a positive electrode substance, 5 parts by mass of acetylene black as a conductive agent, 10 parts by mass of polyvinyliden fluoride ((PVdF) as a binder, and N-methyl-pyrollidone (NMP) as a slurry viscosity adjusting solvent were blended with each other to prepare a slurry for forming a positive electrode active material layer.
Subsequently, the above nonwoven fabric was impregnated with the slurry for forming a positive electrode active material layer, and then dried (see FIG. 3(b)).

Then, 90 parts by mass of hard carbon as a negative electrode substance, 10 parts by mass of PVdF as a binder, and NMP as a slurry viscosity adjusting solvent were blended with each other to prepare a slurry for forming a negative electrode active material layer.
Next, in the same manner as described above, the nonwoven fabric separately prepared was impregnated with the slurry for forming a negative electrode active material layer, and then dried (see FIG. 3(b)).
After that, these nonwoven fabrics were pressed together, thereby obtaining a bipolar electrode structure.

Further, the same procedure as used for production of the bipolar electrode structure was repeated to form a positive electrode active material layer (length 70 mm x width 36 mm x thickness 60 µm; three portions) and a high resistance member (polypropylene; length 70 mm x width 6 mm x thickness 60 µm; two portions) on one surface of the current collector, thereby producing a positive electrode structure. Further, the same procedure as used for production of the bipolar electrode structure was repeated except that the positive electrode structure was not formed on one of the surfaces of the current collector, thereby producing a negative electrode active material layer (length 70 mm x width 36 mm x thickness 60 µm; three portions) and a high resistance member (polypropylene; length 70 mm x width 6 mm x thickness 60 µm; two portions) on one of the surfaces of the current collector, thereby producing a negative electrode structure.

### <Production of Electrolyte>

Lithium phosphate hexafluoride (LiPF₆) as an electrolyte salt was dissolved in a non-aqueous solvent containing ethylene carbonate (EC) and dimethyl carbonate (DEC) at a ratio (volume ratio) of EC:DEC = 1:1 such that the concentration of LiPF₆ was 1 mol/l to prepare a non-aqueous electrolyte solution.

### <Production of Bipolar Battery>

A seal member formed of a polyethylene seal film was placed around the positive electrode active material layer and the negative electrode active material layer of each of the obtained three electrode structures, that is, the bipolar electrode structure, the positive electrode structure, and the negative electrode structure. Then, the electrode structures were arranged in a stacked state such that the positive electrode active material layer of one of the electrode structures and the negative electrode active material layer of the other of the electrode structures were opposed to each other, and the parting portions of the one of the electrode structures and the parting portions of the other of the electrode structures were opposed to each other. Next, three sides as sealing portions of each of the layers except for a liquid injection side thereof were subjected to pressing from upper and lower sides thereof (pressing pressure: 0.2 MPa, pressing temperature: 140°C, pressing time: 5 seconds), so that the seal members were fused together to thereby seal the layers so as to form a bag shape that was opened at only the liquid injection side of each of the layers.
Subsequently, the non-aqueous electrolyte solution was injected into each of the layers through the liquid injection side thereof, and the respective seal members were vacuum-sealed.
After that, the power generation element was sandwiched between strong electric terminals which were each in the form of an aluminum plate capable of covering a whole plane of projection of the power generation element. The aluminum plate had a size of length 80 mm x width 130 mm x thickness 100 µm and had a part extending up to an outside of the plane of projection of the power generation element. The strong electric terminals and the power generation element sandwiched therebetween were vacuum-sealed and wholly covered with an aluminum laminate film, and pressed from both surface sides thereof at atmospheric pressure to thereby enhance contact between the strong electric terminals and the power generation element. Thus, the bipolar battery of Example 3-1 as shown in FIG. 6(a) was obtained.

As a result, in Example 3-1, a volume resistance value similar to that in Example 1-2 was also obtained. In addition, it was confirmed that strength of the electrode was enhanced owing to the presence of the nonwoven fabric as one kind of a porous retainer material.

Although the present invention is explained with reference to the above embodiments, the present invention is not limited to these embodiments and may be variously modified within the scope of the present invention.

## Claims

1. An electrode structure comprising:
a substrate;
an electrode active material layer formed on a main surface of the substrate; and
a high resistance member having an electric resistance higher than that of an electrolyte,
wherein the electrode active material layer is divided into a plurality of portions on a side of a surface thereof, and the high resistance member is formed on parting portions each formed between the divided portions of the electrode active material layer.

2. The electrode structure as claimed in claim 1, wherein the high resistance member has a heat capacity higher than that of the electrolyte.

3. The electrode structure as claimed in claim 1 or 2, wherein the high resistance member has an electrolyte barrier property higher than that of the electrode active material layer.

4. The electrode structure as claimed in any one of claims 1-3, wherein the electrode active material layer comprises a porous retainer material connected with the high resistance member.

5. The electrode structure as claimed in any one of claims 1-4, wherein the high resistance member comprises at least one resin selected from the group consisting of an olefin-based resin, an imide-based resin, an amide-based resin, a urethane-based resin, a fluorine-based resin, a styrene-based resin, a silicon-based resin, and a cellulose-based resin.

6. The electrode structure as claimed in any one of claims 1-5, wherein a part of the substrate is exposed in the parting portion, and the high resistance member is formed to be contacted with the substrate.

7. The electrode structure as claimed in any one of claims 1-6, wherein the substrate is a current collector comprising a conductive resin layer.

8. A bipolar battery comprising:
an electrolyte; and
a plurality of the electrode structures as claimed in any one of claims 1-7,
wherein in the respective electrode structures, the electrode active material layer is formed on both main surfaces of the substrate,
wherein the electrode active material layer formed on one of the main surfaces of the substrate is a positive active material layer, and the electrode active material layer formed on the other of the main surfaces of the substrate is a negative active material layer, and
wherein the plurality of the electrode structures are arranged such that the positive active material layer or the negative active material layer of one electrode structure is opposed to the negative active material layer or the positive active material layer, respectively, of the other electrode structures.

9. The bipolar battery as claimed in claim 8, wherein the plurality of the electrode structures are arranged such that the parting portions of the one electrode structure are respectively opposed to the parting portions of the second electrode structures each being adjacent thereto, and
wherein an area of the surface of the negative active material layer is larger than an area of the surface of the positive active material layer.

10. A method for producing an electrode structure, the method comprising:
a step (1) of forming a high resistance member having an electric resistance higher than that of an electrolyte on a transfer substrate, the high resistance member serving to form a parting portion,
a step (2) of subjecting a substrate to transfer of the high resistance member formed on the transfer substrate; and
a step (3) of applying a slurry for forming an electrode active material layer to a portion of the substrate subjected to transfer of the high resistance member, the portion of the substrate having no high resistance member transferred.

11. The method for producing an electrode structure as claimed in claim 10, wherein the high resistance member is formed of a hydrophobic resin, and
wherein the slurry for forming an electrode active material layer contains a water-based binder.

12. An electrode structure comprising:
an electrode active material layer containing a porous retainer material; and
a high resistance member having an electric resistance higher than that of an electrolyte;
wherein the electrode active material layer is divided into a plurality of portions on a side of a surface thereof, the high resistance member is formed on parting portions each formed between the divided portions of the electrode active material layer, and the high resistance member is connected with the porous retainer material.

13. A method for producing an electrode structure, the method comprising:
a step (1') of heating and/or compressing a part of a porous retainer material to form a high resistance member having an electric resistance higher than that of an electrolyte, the high resistance member serving to form a parting portion, and
a step (2') of impregnating a slurry for forming an electrode active material layer into a portion of the porous retainer material in which no high resistance member is formed.
